# EUROPEAN PATENT APPLICATION

(11) **EP 2 065 826 A2**
(43) Date of publication of application: **03.06.2009**
(21) Application number: 08169484.6
(22) Date of filing: 20.11.2008
(51) Int. Cl.: G06F 21/00

(54) **Method for transferring digital content licenses and device for receiving such licenses**

(30) Priority: 22.11.2007 EP 07301567
(71) Applicant: Thomson Licensing, 92100 Boulogne-Billancourt (FR)
(72) Inventor: Stahl, Niclas, 78500, Sartrouville (FR)
(74) Representative: Berthier, Karine

(57) **Abstract**

A method of transferring a content license (L2) to a first device (10) from a second device (20). The second device (20) renders (202) the license (L2) unusable to itself and sends (208) this license ([L2]) to the first device (10) that verifies (214) that it may import the license ([L2]) which is the case if it has rendered one of its own licenses ([L1],) unusable to it, but has not exported this license ([L1],). If so, it updates (216) its license information (F1) so that it may import one license less and makes (218) the received license usable. The first device (10) also receives a content file (S2) that corresponds to the received license. The invention enables flexible transfer of licenses, as e.g. the second device (20) may export the license to the first device (10) without receiving anything in return, but the exportation does provide it with the right to import a further license. Also provided is a device.

## Description

### FIELD OF THE INVENTION

The present invention is generally directed to digital content, and in particular to digital content in Digital Rights Management (DRM) systems.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Today, there are several DRM systems that allow users to download digital content, such as songs, to a player. Each content is associated with a license that is needed to access the content. Such a license is linked to the player, the effect of which being that the digital content cannot be moved from the player to another player. For example, US 2001/0032312 teaches such a system in which users have a KeyCard that stores license information for content that may be used by the user. The user may contact a central server to modify (i.e. swap) licenses on the KeyCard, but there is no possibility to transfer licenses directly from one KeyCard to another. US 2006/0212405 teaches a system that enables transfer of content from one device to another, but the system has the drawback that it requires the interaction of a central server to do so.

It will be appreciated that the possibility to exchange content licenses without having to pass via a central server will benefit the users. If, for example, user A has tired of a song that user B likes and vice versa, it would be interesting for both of them to simply switch songs directly, as it may not always be possible to contact the central server.

In addition, when changing licenses, users may fear license theft, i.e. that they give a license without having anything in return.

It will thus be appreciated that there is a need for a solution that overcomes problems of the prior art.

A solution to this problem is found in European patent application EP 07301185.0 that presents a solution for exchange of Digital Rights Management (DRM) protected content between two devices without the need for a third party. Each user marks a license as unusable and the devices the trade licenses. A user then instructs the device to import the received license. The device verifies that a license has been rendered unusable and only then erases the unusable license and enables the device to use the new license. The content associated with a license may be traded before or after the license exchange, and may also be downloaded from a third party. It is thus possible to exchange DRM protected content without having to contact a central server. While this solution is excellent when two users want to swap DRM protected content stored on their devices, it does however not enable transfer if one of the users has no interest in any of the contents the other user has to offer.

At present no solutions to this problem exist and it is an object of the present invention to provide an improved way of enabling users to exchange DRM protected digital content.

### SUMMARY OF THE INVENTION

In a first aspect, the invention is directed to a method of transfer of a license to a first device from a second device. The first device stores at least one license and license information about the at least one license. The first device receives a license from the second device and verifies the license information to decide if it may import the received license. In case the first device may import the received license, it updates the license information so that the first device may import one license less and renders the received license available for use. The method enables multilateral license transfer.

In a first preferred embodiment, the verification step comprises verifying that the first device has rendered at least one license unusable by the first device.

In a second preferred embodiment, the license information is stored in a license file.

In a third preferred embodiment, the license information comprises information stored in the at least one license.

In a fourth preferred embodiment, the updating step comprises erasing a license previously transferred to a third device.

In a fifth preferred embodiment, the first device receives a content file associated with the license.

In a sixth preferred embodiment, the first device and the second device are content consumer devices.

In a second aspect, the invention is directed to a first device for reception of a license from a second device. The first device comprises an interface adapted to receive the license; a memory adapted to store at least one license, license information about the at least one license, and the received license; a processor adapted to verify the license information to decide if the received license may be imported and, in case the received license may be imported, update the license information so that the first device may import one license less and render the received license available for use. The first device may import the received license if it has rendered a license unusable to it. The first device is adapted to send the unusable license to a third device.

In a first preferred embodiment, the first device is a content consumer device.

### BRIEF DESCRIPTION OF THE DRAWINGS

Preferred features of the present invention will now be described, by way of example, with reference to the accompanying drawing, in which:

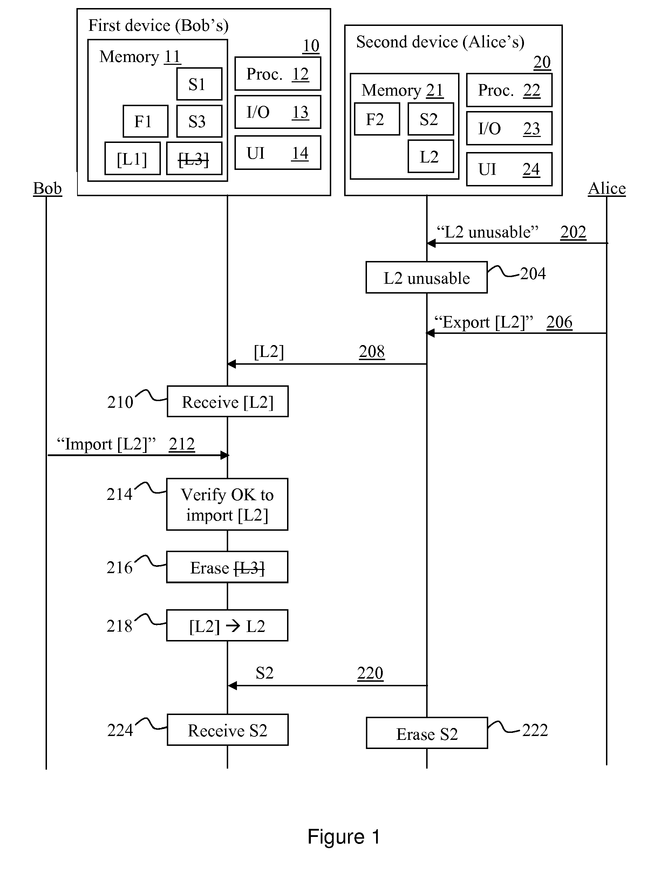

Figure 1 illustrates a signal flow chart of a method of exchanging DRM protected digital content according to a preferred embodiment of the invention.

### DETAILED DESCRIPTION OF PREFERRED EMBODIMENTS

The general inventive idea of the invention is to separate the steps of rendering a license unusable and transferring the license to another device, so that they may be performed relatively independently, as will be seen hereinafter. In a manner of speaking, when a user renders a license unusable by the device, this provides the right to import another license (a token, if one wishes to see it this way) and the right is removed when another license is imported. However, the unusable license remains with stored on the device until it has been exported, after which it may be erased.

Figure 1 is a signal flow chart of a method of exchanging licenses for DRM protected digital content (hereinafter "content") according to a preferred embodiment of the invention.

The method has four actors: a first user, Bob, who has a first device 10, and a second user, Alice, who has a second device 20. Each device 10, 20 comprises:
- a functional memory space 11, 21 for storing digital information, such as content,
- processing means 12, 22 (hereinafter "processor") that may be embodied in one or more physical processors,
- an interface 13, 23 for communicating with the DRM provider and/or another device, and
- a user interface 14, 24.

Each memory space 11, 21 stores a license file F1, F2 with information on the capabilities (permissions, if you like) of the device to access the content corresponding to different licenses. According a preferred embodiment of the invention, there are three general types of license: normal license, for content which can be normally accessed (e.g. played) by the device, exported license, and received license. The content linked to exported and received licenses cannot normally be played by the device and the use of these licenses will be further explained hereinafter.

Now, imagine that Bob on his device 10 had a Beatles song S1 that he has tired of and has rendered its license unusable (indicated by the brackets, i.e. [L1]) and a song S3 by The Selecter that he also has tired of and has not only rendered its license L3 unusable but has also exported the license L3 (indicated by brackets for being unusable and strikethrough for having been exported, i.e. to a third device (not shown), but that he has not imported any song in their stead. Bob is thus able to import two licenses, but it is preferred that he may only export the Beatles license L1. Imagine further that Alice has a Madness song S2 on her device 20 and that she has tired of this song, but she has not yet rendered the license unusable by her. Finally, imagine that Bob and Alice meet to look at each others songs, and that the outcome is that Bob would like to have Alice's Madness song S2, but that Alice does not want any of Bob's songs. It should be mentioned again that in a preferred embodiment, a license may not be exported more than once, so Bob may not export his song S3 by The Selecter. Still, Alice is willing to export her Madness license L2 and song S2 to Bob. It will be assumed that their songs have been provided by the same system, or at least that the songs are protected by compatible DRM systems. The skilled person will appreciate that the method may be used to trade other kinds of content than songs.

To start the exemplary method, Alice instructs 202 her device 20 to render the Madness license L2 unusable, which the device 20 does in step 204, after which the license is denoted [L2]. There are various ways for the device to do this, as will be detailed hereinafter. It should be noted that there is no need for the two devices to be connected at this point.

Once the two devices 10, 20 are connected, Alice instructs 206 her device 20 to send the Madness license [L2] to Bob's device 10, which it does in step 208 and Bob's device receives 210 the license [L2]. Any suitable way of transmission for the data may be used, such as for example infra-red link, Internet, USB token, Bluetooth^{™} link, and direct cable.

At this point, Bob's device 10 may notify (not shown) Alice's device that the transfer was successful, but this is not mandatory. In case Bob's device 10 may import at least one license, the notification may state this; it is also possible, in the opposite case, that the notification states that the transfer was not successful, upon which Bob's device 10 erases the received license and Alice's device 20 modifies data as if the Madness license [L2] hadn't been exported at all. In a preferred embodiment, however, a device may receive a license and store it, even if it is not able to import it at once, and then, once a license has been rendered unusable, import the received license for real.

Bob then preferably instructs 212 his device 10 to import the received Madness license file [L2]. Before importing the received license file [L2], the processor 12 verifies 214 that a license may be imported, preferably by verifying that at least one license present on the device 10 has been rendered unusable. If this is true - in the example Bob has rendered two licenses [L1] and unusable - the processor 12 updates its license information (as will be seen hereinafter) to indicate that only one more license may be imported. In the present example, it is preferable to do so by deleting 216 license , as this license may not be exported again and as a license has been imported in its stead.

Bob's device 10 then changes 218 the received license [L2] to normal license L2, if necessary by unprotecting it, for example by decryption if the received license is encrypted.

The skilled person will appreciate that the method described only transferred a license from Alice's device 20 to Bob's device 10. In one embodiment, a license file also comprises the content.

The preferred embodiment, however, separates content S from the associated license L. In fact, there is no set moment during which the content S must be transferred. As the content is unusable without the license it may thus be freely distributed. The content may thus be copied from one device to another before the method transferring the licenses begins or after the same method, but it will be appreciated that the content may also be downloaded from a third entity, such as the content owner, either before or after the transfer of the licenses. In the preferred embodiment, it is preferred that the content file is erased when a device no longer has any use for it. An example of this is illustrated in Figure 1. Alice's device 20 sends 220 the Madness song S2 to Bob's device 10 and erases 222 the content file S2. Bob's device 10 receives 224 the Madness song and stores it.

After these steps, Bob can play the Madness song S2 on his device 10, but still not the Beatles song S1 (neither the Selecter song nor its license remains on the device 10) and Alice can no longer play the Madness song S2 on her device 20. Furthermore, Bob may import another license as his Beatles license [L1] is unusable and he may also export this license. Alice, on the other hand, may now import a license and, in one embodiment, her Madness license remains on her device 20 in order to keep track that she may indeed import another license.

It will be appreciated that it is also possible to further protect the exported license, for example by encryption.

The exported license is preferably self-protected; the network layer is not constraint. In other words, when the exported license is protected, simply copying the transferred file is not sufficient, as it needs to be unprotected, which as will be seen hereinafter, preferably is done only when a device has established that it has sent another license in exchange for the then received license.

As will be appreciated, the present invention enables exchange of DRM protected content between content consumer devices without having to interact with a third device, such as a central server.

In order to be able to import and export licenses according to the method of the invention, a device needs to keep track of its licenses.

In a preferred embodiment, this is achieved by setting particular bits in the license header and/or in the license file. For example, a first bit could indicate that the license has been rendered unusable, a second bit that the license has been exported, and a third bit that the license has been imported or that the right provided by the unusable license to import another license has been exercised. This embodiment enables eight different bit combinations, as will be described in Table 1 hereinafter.

**Table 1**

| | |
|---|---|
| 000 | "Normal" license: The license has not been rendered unusable and it is not imported. |
| 001 | "Imported" license: The license is imported, but not yet rendered usable to the user. |
| 010 | Impossible combination |
| 011 | Impossible combination |
| 100 | The license is unusable; this provides a right to import another license |
| 101 | The license is unusable and the right to import another license has been exercised. The device should store the license, as it hasn't been exported yet. |
| 110 | The license is unusable and has been exported, and the right to import another license remains. |
| 111 | The license is unusable, the license has been exported, and the right to import another license has been exercised. The license may be erased. |

It is easy for the device to keep count of how many licenses, if any, may be imported by counting the number of unusable licenses and deducting the number of imported licenses.

In the example of Figure 1, the bit values for the licenses are illustrated in Table 2 and Table 3.

**Table 2**

| Before the start of the method in Figure 1 | |
|---|---|
| L1 | 100 |
| L2 | 000 |
| L3 | 110 |

**Table 3**

| After the end of the method in Figure 1 | |
|---|---|
| L1 | 100 (unchanged) |
| L2 | 110 |
| L3 | (no longer exists) |

Other, more elaborate ways of achieving the same goal are also possible, such as for example keeping the necessary information in different files on the device.

It will be understood that the present invention has been described purely by way of example. Each feature disclosed in the description and (where appropriate) the claims and drawings may be provided independently or in any appropriate combination. Features described as being implemented in hardware may also be implemented in software, and vice versa. Connections may, where applicable, be implemented as wireless connections or wired, not necessarily direct or dedicated, connections.

Reference numerals appearing in the claims are by way of illustration only and shall have no limiting effect on the scope of the claims.

## Claims

1. A method of transfer of a license to a first device (10) from a second device (20), the first device (10) storing at least one license and license information (F1) about the at least one license, the method comprising, at the first device (10), the steps of:
- receiving (210) a license ([L2]) from the second device (20);
- verifying (214) the license information (F1) to decide if it may import the received license ([L2]); in case the first device (10) may import the received license ([L2]):
- updating (216) the license information (F1) so that the first device may import one license less; and
- rendering (218) the received license ([L2]) available for use;
wherein the method enables multilateral license transfer.

2. The method of claim 1, wherein the verification step (214) comprises verifying that the first device (10) has rendered at least one license unusable by the first device (10).

3. The method of claim 1, wherein the license information (F1) is stored in a license file.

4. The method of claim 1, wherein the license information (F1) comprises information stored in the at least one license.

5. The method of claim 1, wherein the updating step comprises erasing a license previously transferred to a third device.

6. The method of claim 1, further comprising the step of receiving (224) a content file (S2) associated with the license ([L2]).

7. The method of claim 1, wherein the first device (10) and the second device (20) are content consumer devices.

8. A first device (10) for reception of a license ([L2]) from a second device (20), the first device (10) comprising:
- an interface (13) adapted to receive the license ([L2]);
- a memory (11) adapted to store at least one license, license information (F1) about the at least one license, and the received license ([L2]);
- a processor (12) adapted to:
- verify the license information (F1) to decide if the received license ([L2]) may be imported; and in case the received license ([L2]) may be imported:
- update the license information (F1) so that the first device may import one license less; and
- render the received license ([L2]) available for use;
wherein the first device (10) may import the received license ([L2]) if it has rendered a license unusable to it, and wherein the first device (10) is adapted to send the unusable license to a third device.

9. The first device of claim 8, wherein the device is a content consumer device.
